# EUROPÄISCHE PATENTSCHRIFT

(11) **EP 1 402 238 B1**
(45) Veröffentlichungstag und Bekanntmachung des Hinweises auf die Patenterteilung: **11.01.2006**
(21) Anmeldenummer: 02758273.3
(22) Anmeldetag: 25.06.2002
(51) Int. Cl.: G01G 11/04, B65G 17/16

(54) **KETTENFÖRDERER IN WAAGENFORM**
CHAIN CONVEYOR IN THE FORM OF SCALES
TRANSPORTEUR A CHAINE EN FORME DE CHARIOT

(30) Priorität: 25.06.2001 DE 10130022
(43) Veröffentlichungstag der Anmeldung: 31.03.2004
(73) Patentinhaber: Pfister GmbH, 86165 Augsburg (DE)
(72) Erfinder: HÄFNER, Hans, Wilhelm, 86551 Aichach-Walchshofen (DE)
(74) Vertreter: Fiener, Josef
(86) Internationale Anmeldenummer: PCT/EP2002/007018
(87) Internationale Veröffentlichungsnummer: WO 2003/001161

(56) Entgegenhaltungen:
- DE-A- 19 640 713
- DE-A- 19 829 036
- FR-A- 2 545 797

## Beschreibung

Die Erfindung betrifft einen Kettenförderer zum gravimetrischen Messen/Dosieren von Schüttgütern, mit einem Gehäuse/Trog, in dem wenigstens zwei Förderketten mit daran befestigten leistenförmigen Mitnehmern umlaufen, sowie einer Einlaß-/Befüllöffnung und einer Auslaßöffnung in dem Gehäuse/Trog, wobei zwischen der Einlaß-/Befüll- und Auslaßöffnung wenigstens eine auf mindestens einer Kraftmeßvorrichtung abgestützte Meßbrücke angeordnet ist.

Derartige Kettenförderer, wie sie z.B. aus der DE-A-198 29 036 bekannt sind, werden zur Förderung und Wägung von Schüttgut verwendet. Dabei werden derartige Kettenförderer auch zunehmend in der Grundstoffindustrie (z. B. bei der Zementherstellung) zum Dosieren oder der Förderstärkenerfassung von Schüttgütern eingesetzt, da sie einen verschleißfesten Aufbau bei hohen Durchsätzen und große Abzugskräfte ermöglichen. Zudem ist der Kettenförderer relativ preiswert in der Herstellung und der Wartung, sowie einfach zu montieren, so daß sich dieser aufgrund des robusten Aufbaus auch für abrasive, grobkörnige oder klebrige Schüttgüter als Bunkerabzugsorgan eignet.

Nachteilig bei dem üblichen Aufbau des Kettenförderers ist jedoch, daß die Dosiergenauigkeit relativ gering sein kann, wenn bei der Entleerung Fördergut an den Mitnehmerstegen anhaftet oder Störkräfte aus den Förderketten die Messung verfälschen. Hierdurch können sich beträchtliche Abweichungen hinsichtlich der Dosiergenauigkeit ergeben, die jedoch insbesondere für Zuschlagstoff-Mischungen wichtig ist. Dabei sind bereits Waagen in Verbindung mit Bandförderern oder auch Plattenbandförderern bekannt, z. B. gemäß der DE 195 36 871 oder der DE 42 30 368, wobei das Förderband oder das Plattenband über eine ortsfeste Wägebrücke verläuft. Diese Förderer haben jedoch Nachteile hinsichtlich Verschleißverhalten oder dem erforderlichen Energiebedarf, da einerseits Förderbänder aus Gummimaterialien, auch in verstärkter Ausführung einem hohen Verschleiß unterliegen, während andererseits Plattenbänder aufgrund der Relativbewegung zwischen den einzelnen Gelenken eine hohe Reibung aufweisen, insbesondere bei hoher Belastung.

Demzufolge liegt der Erfindung die Aufgabe zugrunde, die Dosiergenauigkeit von Kettenförderern bei einfacher Bauweise zu verbessern.

Diese Aufgabe wird gelöst durch einen Kettenförderer gemäß den Merkmalen des Patentanspruches 1. Bevorzugte Ausgestaltungen sind Gegenstand der abhängigen Ansprüche.

Durch die mehrfach gelenkige Lagerung der "nachlaufend" bzw. schleppend angeordneten Mitnehmer werden die Mitnehmer von den Förderketten wägetechnisch "entkoppelt". Durch diese zumindest doppelt gelenkige Lagerung der Mitnehmer an den Förderketten liegen die Mitnehmer plan auf den Gleitflächen der Meßbrücke auf. Zudem werden Störkräfte an den Förderketten, z. B. beim Klemmen von körnigem Material zwischen den Mitnehmern und der Meßbrücke weitgehend vermieden, so daß die Meßstrecke selbst frei von äußeren Kräften ist. Durch diese höhenbewegliche Führung der in Draufsicht U-förmigen Mitnehmer an den Förderketten entsteht eine zuverlässige und einfache Mehrfach-Entkoppelung, wobei die Mitnehmer von den Förderketten in Umlaufrichtung sicher angetrieben werden. Damit werden auch Probleme mit ungleicher Förderung, wie diese bei der starren Anordnung der Mitnehmer auftreten können, ebenfalls sicher vermieden.

Eine besonders einfache Ausführung des vorgeschlagenen Kettenförderers ergibt sich dadurch, daß die Mitnehmer des Kettenförderers an einer lenker- oder laschenartigen Halterung schwenkbar angeordnet sind. Diese Anordnung eignet sich auch insbesondere zum Nachrüsten bestehender Kettenförderer, da durch die einfache Befestigung der seitlichen Gelenkbolzen eine Nachrüstung des Kettenförderers, z. B. auch von Trogketten-Fördergeräten mit der gravimetrischen Kraftmeßvorrichtung möglich ist.

Gleiches gilt für die bewegliche Lagerung der Mitnehmer, die über weitere Zwischengelenke entkoppelt gelagert ist. Durch Zwischenschaltung derartiger Zwischengelenke, insbesondere von einfachen Scharnieren oder hochkant angeordneten Kettengliedern, ergibt sich eine Art "kardanische" Lagerung und damit eine selbsttätige Zentrierung der Mitnehmer als Förderwerkzeuge. Zudem laufen die Förderketten bei Anordnung seitlicher Begrenzungen an den Mitnehmern außerhalb des Schüttgutstranges, so daß der Verschleiß erheblich verringert werden kann.

Von besonderem Vorteil ist auch die damit erzielbare Materialrückführung, so daß Schüttgutabrieb und sog. Spritzkorn wieder zur Einlaßöffnung zurückgeführt werden kann.

Weitere vorteilhafte Ausgestaltungen ergeben sich aus der nachfolgenden Beschreibung von in der Zeichnung dargestellten Ausführungsbeispielen. Hierbei zeigen:
- Fig. 1: eine Kettenförderer-Waage in Seitenansicht;
- Fig. 2: einen Ausschnitt der Kettenförderer-Waage gemäß Fig. 1 in vergrößerter Perspektivansicht;
- Fig. 3: eine zugehörige Draufsicht gemäß Fig. 2;
- Fig. 4: eine weitere Darstellung des Seitenbereichs des Kettenförderers, ähnlich wie in Fig. 3;
- Fig. 5: eine weiter abgewandelte Ausführung der Halterung gemäß Fig. 3 und 4; und
- Fig. 6: einen Ausschnitt der Endbereiche des Kettenförderers in Seitenansicht.

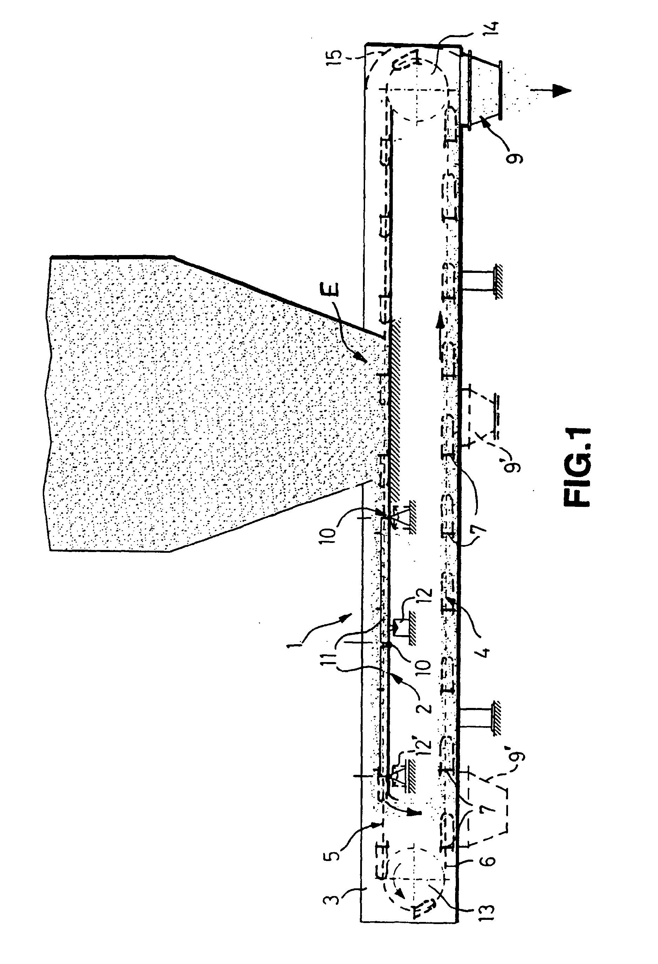

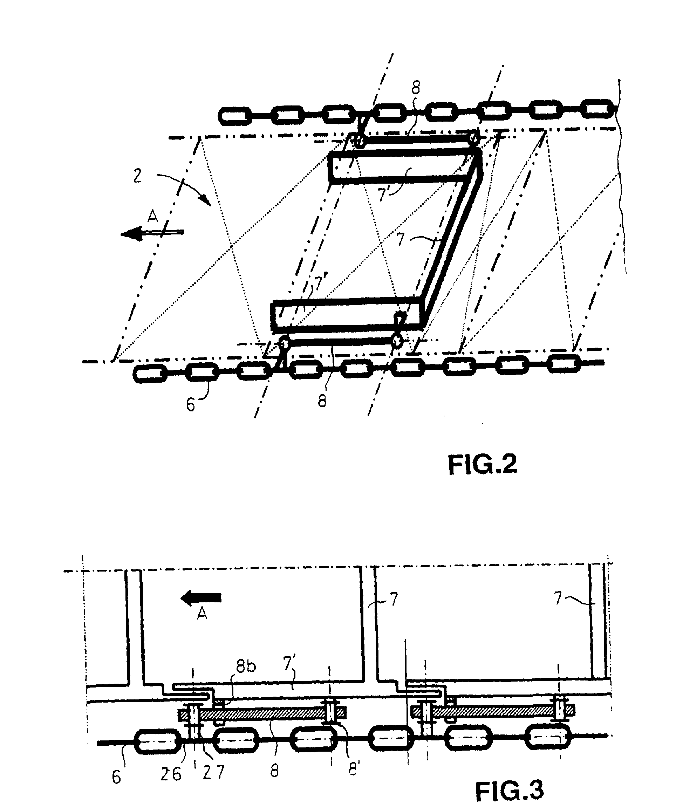

In Fig. 1 und 2 ist in Seitenansicht bzw. perspektivischer Vergrößerung ein Kettenförderer 1 in einem Gehäuse bzw. Trog 3 dargestellt, der eine geradlinig verlaufende Meßstrecke bzw. Meßbrücke 2 aufweist, die an dem Obertrum 5 angeordnet ist. Entlang der Meßbrücke 2 in dem Gehäuse/Trog 3 laufen Förderketten 6, die in gleichmäßigen Abständen (in Draufsicht) U-förmige Förderwerkzeuge bzw. Mitnehmer 7 aufweisen. Durch diese schrapperartigen Mitnehmer 7 wird Schüttgut, das von einer Öffnung E (hier einem Bunker oder Silo) aus in das Gehäuse 3 eintritt, entlang der Meßbrücke 2 im Obertrum 5 und dann entlang dem Untertrum 4 im Uhrzeigersinn zu einer Auslaßöffnung 9 transportiert, wie dies hier mit Pfeilen angedeutet ist. Zwischen der Einlaß-/Befüllöffnung E und der Auslaßöffnung 9 ist hierbei die plattenartige Meßbrücke 2 mittels flexibler Zwischenelemente 10 beweglich bzw. geringfügig nachgiebig gelagert und hierbei auf eine wenigstens unterhalb der Meßbrücke 2 angeordnete Kraftmeßvorrichtung 12, insbesondere eine etwa mittig angeordnete Wägezelle abgestützt. Benachbart zum linken Ende der Meßbrücke 2 ist ein Antrieb 13 in Form eines Kettenrades vorgesehen, das in die Förderketten 6 eingreift.

Nach der Förderung entlang der Meßstrecke/Meßbrücke 2 gelangt das Fördergut (hier punktiert angedeutet) im Vorkopfabwurf vor dem Antrieb 13 nach unten auf eine verschleißfeste Bodenplatte im Bereich des Untertrums 4 und schließlich unter Horizontalförderung mit den parallel zueinander verlaufenden Förderketten 6 und den leistenförmigen Mitnehmern 7 an die Auslaßöffnung 9, wo es unter Wirkung der Schwerkraft herausfallen kann oder auch ausgeblasen werden kann. Es sei darauf hingewiesen, daß eine derartige, nicht dargestellte Ausblasleitung, insbesondere bei druckdichter oder staubdichter Ausführung des Kettenförderers, im Gehäuse 3 angeordnet sein kann, wobei auf die Kraftmeßvorrichtung 12 keine Störmomente ausgeübt werden. Zudem kann damit eine Reinigung der Förderketten 6 und/oder der Mitnehmer 7 erfolgen.

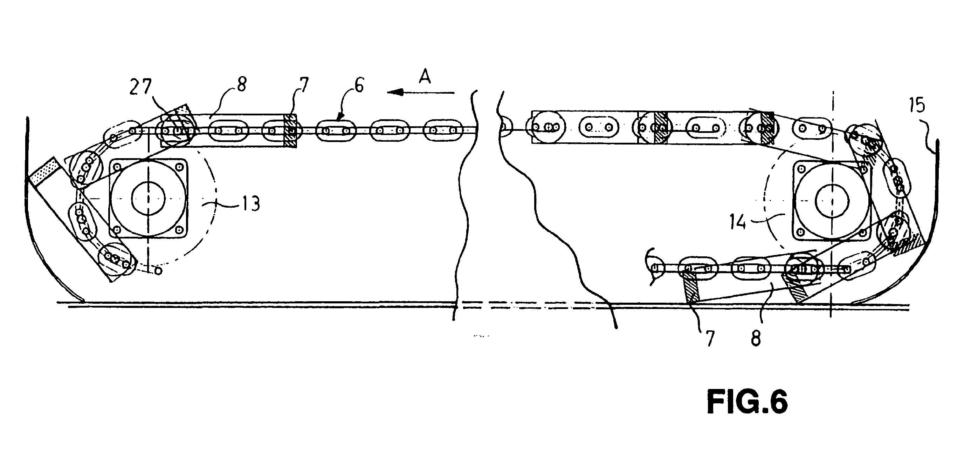

Von Bedeutung ist auch die Führung entlang des hier rechten Gehäusebogens 15, da hierbei ggf. nicht abgeworfenes Schüttgut nach oben zurückgeführt werden kann (vgl. auch Fig. 6). Als Kraftmeßvorrichtung 12 für die Meßbrücke 2 können Kraftmeßvorrichtungen wie Scherkraftgeber oder Wägezellen auf induktiver, kapazitiver oder piezoelektrischer Basis Verwendung finden. Bevorzugt wird hierbei eine praktisch weglos messende Kraftmeßvorrichtung 12, insbesondere eine DMS-Wägezelle verwendet, da sich hierdurch der Knickwinkel der Meßbrücke 2 auf wenige Winkelminuten begrenzen läßt, so daß die Umlaufbewegung der Förderketten 6 praktisch nicht behindert wird.

Die Kraftmeßvorrichtung 12 leitet die Meßwerte über das transportierte Gewicht des Fördergutes an einen Rechner weiter, der hieraus zusammen mit Geschwindigkeitswerten, wie z. B. von einem Tachogenerator auf dem Antrieb 13 gewonnen werden, durch Produktbildung die momentane Durchflußmenge berechnet. Dieser Istwert wird für Dosierzwecke bevorzugt mit einem vorgewählten Sollwert verglichen und bei Abweichungen auf an sich bekannte Weise der regelbare Antrieb 13 nachgeregelt.

In Fig. 2 und 3 ist der seitliche Bereich der an lenkerförmigen Halterungen 8 gelagerten Mitnehmer 7 dargestellt, wobei die "schwimmende" Steckverbindung der Gelenkbolzen 27 an je einen hochkantstehenden Kettenglied der Förderkette 6 ersichtlich ist. Wesentlich ist hierbei, daß die U-förmigen Mitnehmer 7 höhenbeweglich bzw. höhenverschwenkbar bezüglich den Förderketten 6 und der Meßbrücke 2 angeordnet sind, so daß ggf. auftretende Störkräfte nicht in das Meßergebnis einfließen bzw. von der Meßbrücke 2 entkoppelt werden. Die Mitnehmer 7 können dabei durch Schwermetalleinlagen od. dgl. zusätzlich beschwert werden, um ein definiertes Auflageverhalten zu erzielen. Die Förderketten 6 selbst können dabei in kreuzförmig geschlitzten Führungselementen 11 beidseitig geführt sein, während die Mitnehmer 7 mit den Gelenkbolzen 27 (vgl. insbesondere Fig. 3 bis 5) in die hochkantstehenden Kettenglieder 26 seitlich mit Spielpassung eingesteckt sind, so daß Störkräfte nicht auf die Förderketten 6 weitergeleitet werden und die Mitnehmer 7 plan und mehrfach (d. h. in wenigstens zwei Freiheitgraden) entkoppelt auf der Meßbrücke 2 bzw. bei einer Knickbrücke auf deren Hälften aufliegen.

Auf die seitliche Führungsfunktion der Führungselemente 11 kann dabei auch verzichtet werden, so daß die Förderkette 6 beispielsweise nach oben hin durch eine glatte Leiste am Abheben von der Meßstrecke gehindert werden kann, während die Unterseite der Förderketten 6 auf einer PTFE-Leiste auf der Meßbrücke 2 umlaufen kann. Zur Führung und Abstützung der Förderketten 6 auf der Meßstrecke können dabei auch Rollen oder Räder vorgesehen sein.

Wie in Fig. 1 strichliert angedeutet, kann die Auslaßöffnung 9' auch unterhalb der Befüllöffnung E oder in Nähe des Antriebes 13 angeordnet sein. Auf die Auslaßöffnung 9 kann auch eine zweite Meßbrücke folgen. Hierdurch läßt sich das Gewicht der Mitnehmer 7 erfassen, so daß durch Vergleich der beiden Meßwerte der Meßbrücken die an der Auslaßöffnung 9 tatsächlich austretende Fördergutmenge durch Differenzbildung festgestellt werden kann. Sollten somit an den Mitnehmern 7 oder den Förderketten 6 Gutteilchen haften bleiben, wird somit nur die effektiv den Kettenförderer 1 verlassende Schüttgutmenge erfaßt.

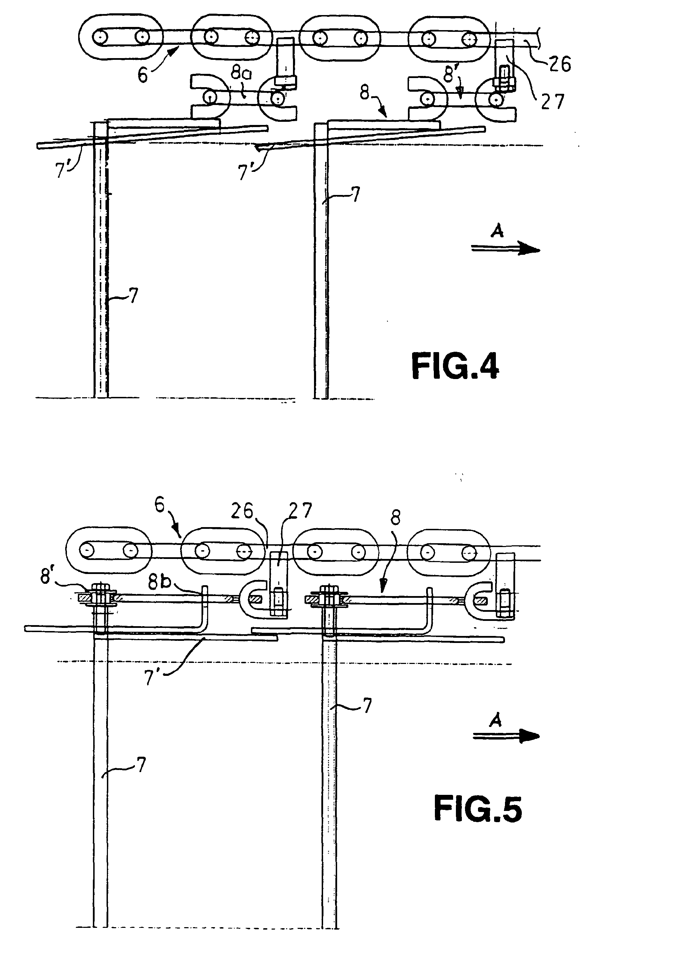

Wie oben angedeutet, handelt es sich bei dem vertikalen Bewegungsspielraum der Mitnehmer 7 um ein relativ geringes Maß, ebenso bei der geringfügigen seitlichen Beweglichkeit, so daß die Umlaufbewegung der Förderketten 6 nicht behindert wird, sondern die Mitnehmer 7 in Seitenrichtung zentriert werden. Wie in Fig. 4 und 5 dargestellt, sind an den Halterungen 8 Schwenkgelenke 8' als schwenkbares Lager für die Mitnehmer 7 vorgesehen, die auch einen gewisse seitliche Beweglichkeit von einigen Miilimetern erlauben. In einfachster Ausführung wird das Schwenkgelenk 8' durch ein an der Halterung 8 befestigtes, hochkant angeordnetes Kettenglied in Art einer kardanischen Lagerung gebildet (Fig. 4), wobei auch Parallogrammgestänge möglich sind. Bei der Ausführung gemäß Fig. 5 wird die Schwenkbarkeit der Mitnehmer 7 in Höhenrichtung (senkrecht zur Zeichenebene) um die Achse des Schwenkgelenks 8' durch einen Anschlag 8b begrenzt, der in ein Langloch der Halterung 8 eingreift. Anstatt dieser Laschen/Bolzen-Lagerungen können auch andere reibungsarme Lagerungen zur Bildung des Schwenkgelenks 8' vorgesehen sein. Dabei ist auch ersichtlich, daß die Gelenkbolzen 27 hier in jedem vierten Kettenglied der Förderketten eingesteckt sind, wobei der Abstand zwischen den Gelenkbolzen 27 auch mehr als vier Kettenglieder betragen kann, damit sich die seitlichen Begrenzungen 7' in Art eines Begrenzungsbleches einander überlappend entlang der Meßbrücke 2 erstrecken können, um einen seitlichen Abfluß des Fördergutes zu den Förderketten 6 hin zu verhindern.

In Fig. 6 sind die beiden Umlenkbereiche des Kettenförders 1 dargestellt, wobei im hier rechten Bereich (Antriebsrad 13) beim Übergang vom Obertrum zum Untertrum durch die oben erwähnten Anschläge 8b ein zu starkes Abkippen der Mitnehmer 7 vermieden werden kann. Dadurch kann eine übermäßige Reibung an dem Gehäuse ausgeschlossen werden. Am entgegengesetzten Ende (Umlenkrad 14) dient die begrenzte Verschwenkbewegung der Mitnehmer 7 zusammen mit dem Gehäusebogen 15 der Materialrückführung nach oben. Auch hierbei kann eine definierte Anlage der Mitnehmer 7 an dem Gehäusebogen 15 erzielt werden.

Es sei darauf hingewiesen, daß die Meßwerte der Kraftmeßvorrichtung(-en) 12 einer an sich bekannten Auswerteelektronik mit Rechner zur Berechnung der Momentan-Förderstärke aus Meßbrückenbelastung und Fördergeschwindigkeit zugeführt werden und dort mit eingestellten Sollwerten verglichen werden. Durch Beschleunigung oder Abbremsen des Antriebes 13 des Kettenförderers 1, beispielsweise mit elektronischer Drehzahlregelung, kann somit die gewünschte Förder- oder Dosiermenge (Förderstärke oder Förderleistung) exakt eingehalten werden, selbst bei relativ schwierig zu fördernden Gütern, wie Klinker oder heißem Schüttgut. Dabei kann diese Kettenförderwaage vollständig staubdicht ausgeführt werden.

## Patentansprüche

1. Kettenförderer (1) zum gravimetrischen Messen/Dosieren von Schüttgütern, mit einem Gehäuse/Trog (3), in dem wenigstens zwei Förderketten (6) mit daran befestigten leistenförmigen Mitnehmern (7) umlaufen, sowie einer Einlaß-/ Befüllöffnung (E) und einer Auslaßöffung (9) in dem Gehäuse/Trog (3), wobei zwischen der Einlaß-/Befüll- (E) und Auslaßöffnung (9) wenigstens eine auf mindestens einer Kraftmeßvorrichtung (12) abgestützte Meßbrücke (2) angeordnet ist,
**dadurch gekennzeichnet, daß**
die Mitnehmer (7) an den Förderketten (6) mehrfach gelenkig gelagert sind, nämlich mit seitlichen Gelenkbolzen (27) formschlüssig in den hochkantstehenden Kettengliedern (26) eingesteckt sind, und zur planen Auflage auf der Meßbrücke (2) ausgebildet sind.

2. Kettenförderer nach Anspruch 1,
**dadurch gekennzeichnet, daß**
die Mitnehmer (7) an einer lenkerförmigen Halterung (8) schwenkbar gelagert sind.

3. Kettenförderer nach Anspruch 1 oder 2,
**dadurch gekennzeichnet, daß**
die Mitnehmer (7) seitliche Begrenzungen (7') aufweisen, insbesondere zur Bildung einer U-Form in Draufsicht.

4. Kettenförderer nach Anspruch 2 oder 3,
**dadurch gekennzeichnet, daß**
die Halterung (8) ein Schwenkgelenk (8') aufweist, insbesondere in Form eines hochkantstehenden Kettengliedes (8a) oder eines Parallelogrammgestänges.

5. Kettenförderer nach Anspruch 4,
**dadurch gekennzeichnet, daß**
das Schwenkgelenk (8') zumindest einen Anschlag (8b) zur Begrenzung des Vertikalhubes des jeweiligen Mitnehmers (7) aufweist.

6. Kettenförderer nach einem der Ansprüche 1 bis 5,
**dadurch gekennzeichnet, daß**
die Mitnehmer (7) entlang den Förderketten (6) um zumindest zwei, bevorzugt drei oder vier Kettenglieder relativ zum Gelenkbolzen (27) nachlaufend angeordnet sind.

7. Kettenförderer nach einem der Ansprüche 1 bis 6,
**dadurch gekennzeichnet, daß**
die Mitnehmer (7) je ein Beschwerungsgewicht aufweisen.

8. Kettenförderer nach einem der Ansprüche 1 bis 7,
**dadurch gekennzeichnet, daß**
die Gelenkbolzen (27) mit zumindest geringer Spielpassung in die Förderketten (6) eingreifen.

9. Kettenförderer nach einem der Ansprüche 3 bis 8,
**dadurch gekennzeichnet, daß**
die Begrenzungen (7') in Förderrichtung (A) etwa der seitlichen Länge der Meßbrücke (2) entsprechen oder länger als diese ausgebildet sind.

10. Kettenförderer nach einem der Ansprüche 1 bis 9,
**dadurch gekennzeichnet, daß**
die Mitnehmer (7) in einem Umlenkbereich (15) von Unterzum Obertrum rückfördernd ausgebildet sind.

## Claims

1. A chain conveyor (1) for gravimetrically measuring/dosing bulk materials, with said conveyor comprising a housing/trough (3) in which at least two conveyor chains (6) with strip-shaped driving elements (7) attached thereto rotate, as well as an inlet/filling opening (E) and an outlet opening (9) in the housing/trough (3), wherein at least one measuring bridge (2) which is supported on at least one force measuring apparatus (12) is arranged between the inlet/filling (E) and outlet opening (9),
**characterized in that**
the driving elements (7) are mounted with multiple articulations on the conveyor chains (6), namely are inserted with lateral hinge bolts (27) in a positive-fitting manner in the upright chain links (26), and are configured to be placed flatly on the measuring bridge (2).

2. A chain conveyor as claimed in claim 1, **characterized in that** the driving elements (7) are swivelably arranged on a guide-bar-like holding device (8).

3. A chain conveyor as claimed in claim 1 or 2, **characterized in that** the driving elements (7) comprise lateral boundaries (7'), especially for forming a U-shape in the top view.

4. A chain conveyor as claimed in claim 2 or 3, **characterized in that** the holding device (8) comprises a drag-link (8'), especially in the form of an upright chain link (8a) or link bars of the parallelogram.

5. A chain conveyor as claimed in claim 4, **characterized in that** the drag-link (8') comprises at least one stop (8b) for delimiting the vertical stroke of the respective driving element (7).

6. A chain conveyor as claimed in one of the claims 1 to 5, **characterized in that** the driving elements (7) are arranged in a trailing manner along the conveyor chains (6) by at least two, preferably three or four chain links relative to the hinge bolt (27).

7. A chain conveyor as claimed in one of the claims 1 to 6, **characterized in that** the driving elements (7) each comprise a top weight.

8. A chain conveyor as claimed in one of the claims 1 to 7, **characterized in that** the hinge bolts (27) engage with an at least low loose fit in the conveyor chains (6).

9. A chain conveyor as claimed in one of the claims 3 to 8, **characterized in that** the boundaries (7') correspond in the conveying direction (A) approximately to the lateral length of the measuring bridge (2) or are provided with an arrangement which is longer than the same.

10. A chain conveyor as claimed in one of the claims 1 to 9, **characterized in that** the driving elements (7) are provided with a recirculating arrangement in a deflection region (15) from lower run to upper run.

## Revendications

1. Transporteur à chaînes (1) pour le mesurage/dosage gravimétrique de matières en vrac, avec un carter/bac (3) dans lequel circulent aux moins deux chaînes transporteuses (6) sur lesquelles sont fixés des entraîneurs (7) en forme de barres, ainsi qu'avec une ouverture d'admission/remplissage (E) et une ouverture d'évacuation (9) dans le carter/bac (3), au moins un pont de mesure (2) s'appuyant sur au moins un dispositif dynamométrique (12) est disposé entre l'ouverture d'admission/remplissage (E) et l'ouverture d'évacuation (9),
**caractérisé en ce que** les entraîneurs (7) sont montés sur les chaînes transporteuses (6) en articulation multiple, à savoir sont insérés par des boulons d'articulation latéraux (27) en engagement positif dans les maillons de chaîne (26) placés de chant, et sont conçus pour reposer à plat sur le pont de mesure (2).

2. Transporteur à chaînes selon la revendication 1, **caractérisé en ce que** les entraîneurs (7) sont montés à pivotement sur un support (8) en forme de bras articulé.

3. Transporteur à chaînes selon la revendication 1 ou 2, **caractérisé en ce que** les entraîneurs (7) présentent des délimitations latérales (7'), notamment afin de former une forme de U en vue de dessus.

4. Transporteur à chaînes selon la revendication 2 ou 3, **caractérisé en ce que** le support (8) présente une articulation pivotante (8'), notamment sous la forme d'un maillon de chaîne (8a) placé de chant ou d'une tringlerie en parallélogramme.

5. Transporteur à chaînes selon la revendication 4, **caractérisé en ce que** l'articulation pivotante (8') présente au moins une butée (8b) pour limiter la course verticale de l'entraîneur respectif (7).

6. Transporteur à chaînes selon l'une des revendications 1 à 5, **caractérisé en ce que** les entraîneurs (7) sont disposés sur une distance d'au moins deux et de préférence trois ou quatre maillons de chaîne en aval du boulon d'articulation (27).

7. Transporteur à chaînes selon l'une des revendications 1 à 6, **caractérisé en ce que** les entraîneurs (7) présentent chacun un poids alourdissant.

8. Transporteur à chaînes selon l'une des revendications 1 à 7, **caractérisé en ce que** les boulons d'articulation (27) s'engagent dans les chaînes transporteuses (6) avec au moins un faible jeu d'ajustement.

9. Transporteur à chaînes selon l'une des revendications 3 à 8, **caractérisé en ce que** les délimitations (7') correspondent approximativement, dans la direction de transport (A), à la longueur latérale du pont de mesure (2), ou sont réalisées plus longues que ce dernier.

10. Transporteur à chaînes selon l'une des revendications 1 à 9, **caractérisé en ce que** les entraîneurs (7) sont conçus pour exercer une recirculation dans une région de renvoi (15) du brin inférieur au brin supérieur.
